# FASCICULE DE BREVET EUROPEEN

(11) **EP 1 969 696 B1**
(45) Date de publication et mention de la délivrance du brevet: **06.07.2011**
(21) Numéro de dépôt: 06847213.3
(22) Date de dépôt: 26.12.2006
(51) Int. Cl.: H02K 1/27, H02K 21/24, H02K 16/02, H02K 5/128

(54) **MACHINE ELECTRIQUE TOURNANTE COMPORTANT DES PIECES POLAIRES ET DES AIMANTS PERMANENTS**
ROTIERENDE ELEKTRISCHE MASCHINE MIT POLSTÜCKEN UND PERMANENTMAGNETEN
ROTATING ELECTRICAL MACHINE COMPRISING POLE PIECES AND PERMANENT MAGNETS

(30) Priorité: 03.01.2006 FR 0650021
(43) Date de publication de la demande: 17.09.2008
(73) Titulaire: MOTEURS LEROY-SOMER, 16000 Angoulême (FR)
(72) Inventeur: SAINT-MICHEL, Jacques, F-16000 Angouleme (FR)
(74) Mandataire: Tanty, François
(86) Numéro de dépôt international: PCT/FR2006/051424
(87) Numéro de publication internationale: WO 2007/077381

(56) Documents cités:
- EP-A- 1 624 554
- JP-A- 61 244 250
- JP-A- 2000 278 894
- JP-A- 2001 238 382
- JP-A- 2005 176 575
- JP-A- 2006 166 626
- JP-A- 2006 311 772
- US-A1- 2006 284 507

## Description

La présente invention concerne les rotors à aimants permanents et les machines électriques tournantes comportant de tels rotors.

On connaît par le brevet US 6 833 647 et par la demande US 2005/0179337 des machines discoïdes et par la demande EP 1 152 516 des machines électriques radiales, ces machines discoïdes ou radiales comportant des aimants permanents, la direction d'aimantation des aimants n'étant pas dirigée vers le stator. Dans ces machines, le flux des aimants est concentré par des pièces polaires disposées entre les aimants.

Dans le brevet US 6 833 647, les aimants associés à une pièce polaire ne définissent que deux directions d'aimantation, coplanaires.

Il existe un besoin pour améliorer encore les machines à aimants permanents afin par exemple d'augmenter leur rendement ou leur couple et/ou diminuer l'encombrement. L'invention a ainsi pour objet une machine électrique tournante, comportant :
- au moins un stator,
- au moins un rotor,
le rotor définissant au moins un entrefer avec le stator et ayant un axe de rotation, le rotor comportant des aimants permanents et des pièces polaires entre les aimants, au moins une pièce polaire étant associée à un ou plusieurs aimants permanents pour concentrer le flux magnétique de ce ou ces aimants,
ce ou ces aimants définissant au moins trois directions d'aimantation différentes, le flux résultant dans la pièce polaire en direction du stator étant non coplanaire avec deux des directions d'aimantation au moins.

Deux directions d'aimantation différentes d'un ou plusieurs aimants permanents associés à une même pièce polaire peuvent faire un angle de plus de 20° entre elles.

L'une au moins des directions d'aimantation peut ne pas être dirigée vers l'entrefer.

Lorsque trois directions d'aimantation au moins sont associées à une même pièce polaire, deux de ces directions peuvent être parallèles à un plan perpendiculaire à l'axe de rotation et la troisième est par exemple parallèle à l'axe de rotation, en direction du stator.

La présence des pièces polaires peut permettre de réduire la dimension des aimants.

Au moins une pièce polaire, voire toutes les pièces polaires, peut avoir au moins trois faces disposées en regard d'aimants permanents. Ces faces peuvent avoir des normales respectives non coplanaires.

Au.moins une pièce polaire peut être hexaédrique. Au moins une pièce polaire peut avoir cinq faces disposées en regard d'aimants permanents et une sixième face dépourvue d'aimant. Cette face dépourvue d'aimant peut faire face à l'entrefer et au stator.

Les aimants entourant la pièce polaire peuvent permettre d'augmenter le flux magnétique dans la pièce polaire et également d'éviter les flux de fuite sur les faces de la pièce polaire en regard de ces aimants, notamment les faces qui étaient sur les machines connues dépourvues d'aimants.

Ainsi, la concentration du flux dans les pièces polaires est améliorée, permettant de diminuer les fuites magnétiques.

Les pièces polaires peuvent comporter des faces qui peuvent être planes, concaves ou convexes. Les pièces polaires peuvent comporter six faces dont l'une est tournée vers l'entrefer, une autre est opposée à l'entrefer, deux autres sont en regard des pièces polaires adjacentes dans le sens circonférentiel et enfin deux faces latérales qui relient les quatre autres faces.

Les pièces polaires peuvent avoir des faces dirigées vers l'entrefer disposées en regard d'aimants permanents. En variante, des aimants permanents peuvent être disposés dans des logements des pièces polaires sous la surface de ces dernières qui est en regard de l'entrefer.

Les pièces polaires peuvent avoir des faces opposées à l'entrefer disposées en regard d'aimants permanents.

Au moins un aimant permanent peut être disposé en regard d'une face latérale d'une pièce polaire.

Au moins un aimant permanent peut être disposé en regard d'une face d'une pièce polaire située à la périphérie extérieure du rotor.

Au moins un aimant permanent peut être disposé sur une face d'une pièce polaire en regard de l'axe de rotation du rotor.

Le flux d'un aimant disposé sur une face d'une pièce polaire qui fait face à une pièce polaire adjacente peut circuler entre la pièce polaire en question et la pièce polaire adjacente.

Dans le cas par exemple où les pièces polaires comportent des aimants disposés sur leurs faces latérales ou faisant face à l'entrefer ou opposées à l'entrefer, le rotor peut comporter au moins un circuit magnétique permettant au flux magnétique de circuler entre deux aimants permanents circonférentiellement consécutifs. Le flux magnétique d'un aimant circule ainsi entre une pièce polaire et le circuit magnétique.

En variante, les aimants faisant face à l'entrefer peuvent ne pas être associés à une pièce magnétique.

Le circuit magnétique précité peut par exemple comporter un anneau disposé contre les aimants selon l'axe de la machine. Le circuit magnétique peut par exemple comporter deux anneaux disposés à chacune des extrémités axiales du rotor. Le circuit magnétique peut encore comporter une enveloppe tubulaire entourant le rotor à sa périphérie. Le circuit magnétique peut comporter un manchon entourant un arbre du rotor.

L'arbre peut être réalisé dans un matériau amagnétique ou au contraire être réalisé dans un matériau magnétique.

Des aimants permanents peuvent être disposés sur au moins une face d'une pièce polaire tournée vers une pièce polaire adjacente.

Au moins une pièce polaire peut être associée à un aimant de forme annulaire.

Les aimants permanents peuvent entièrement entourer la pièce polaire ou ne l'entourer que partiellement. Au moins une pièce polaire peut par exemple être associée à un aimant permanent de forme annulaire, monté autour de la pièce polaire.

Il faut comprendre l'expression « forme annulaire » de manière large, à savoir que l'aimant forme une courbe fermée, par exemple circulaire, oblongue ou d'une autre forme.

Au moins une pièce polaire peut, dans un exemple de mise en oeuvre de l'invention, être associée à un aimant permanent ayant une forme en creux, par exemple en calotte sphérique. La pièce polaire peut s'étendre dans le creux de l'aimant. Une telle configuration peut permettre de diminuer le volume d'aimant nécessaire pour atteindre le flux magnétique recherché. L'aimant permanent ayant une forme en creux peut définir au moins trois directions d'aimantation non coplanaires.

Les pièces polaires peuvent ne pas être magnétiquement reliées entre elles. En variante, les pièces polaires peuvent être reliées magnétiquement entre elles, notamment par des ponts magnétiques, par exemple pour des raisons mécaniques.

Le stator peut comporter des noyaux magnétiques sur lesquels sont disposées des bobines, les noyaux magnétiques comportant par exemple une bande de tôle enroulée sur elle-même. Cette bande de tôle peut ne pas comporter d'encoches formées par découpage de la tôle.

Au moins l'une des pièces polaires du rotor, des noyaux magnétiques du stator et/ou du circuit magnétique du rotor peut comporter une bande de tôle enroulée sur elle-même, puis pressée en forme si nécessaire, par exemple en forme oblongue ou en secteur.

La tôle utilisée peut par exemple être relativement fine. Les pièces polaires peuvent avoir une forme circulaire, elliptique ou en secteur. La forme en secteur peut permettre une répartition du flux dans l'entrefer relativement bonne.

Notamment dans le cas d'une machine discoïde, la tôle peut être orientée de telle sorte que le flux magnétique traverse la tôle dans le sens de sa plus faible épaisseur, de manière à diminuer les pertes magnétiques.

Le flux magnétique résultant dans au moins une pièce polaire peut avoir une direction parallèle à l'axe de rotation.

Le rotor peut faire face au stator suivant l'axe de rotation, ou en variante la machine peut comporter deux rotors disposés de part et d'autre du stator suivant l'axe de rotation. La machine peut comporter, en variante encore, deux stators disposés de part et d'autre d'un rotor central suivant l'axe de rotation. La machine peut comporter plusieurs stators et plusieurs rotors alternés suivant l'axe de rotation.

Le flux magnétique résultant dans au moins une pièce polaire peut avoir une direction perpendiculaire à l'axe de rotation.

La machine peut être radiale, le rotor et le stator étant concentriques. Le rotor peut être radialement extérieur ou radialement intérieur. La machine peut encore comporter deux rotors, l'un radialement extérieur et l'autre radialement intérieur.

Le stator peut être à bobinage concentré.

Dans le cas d'un rotor destiné à équiper une machine radiale, le circuit magnétique peut par exemple comporter un anneau disposé contre les aimants latéraux, selon l'axe de la machine. Le rotor peut si nécessaire comporter deux anneaux disposés à chacune des extrémités axiales du rotor. De plus, dans le cas où des aimants ont une aimantation dirigée vers l'entrefer, les aimants peuvent être enterrés sous la surface des pièces polaires et il peut ne pas être nécessaire d'utiliser de circuit magnétique précité.

Lorsque les aimants sont disposés à la surface des pièces polaires, le rotor peut comporter un circuit magnétique. Ce circuit magnétique peut entourer l'arbre de la machine ou être constitué par l'arbre de la machine dans le cas où le rotor est intérieur, ou en variante comporter une enveloppe tubulaire entourant le rotor à sa périphérie dans le cas où le rotor est extérieur. De même, le rotor peut comporter un circuit magnétique pour permettre la circulation du flux des aimants disposés sur la face opposée à l'entrefer, si nécessaire. Ce circuit magnétique peut comporter une enveloppe tubulaire ou un manchon entourant l'arbre ou être constitué par l'arbre de la machine, selon que le rotor est intérieur ou extérieur.

Dans le cas d'un rotor destiné à équiper une machine discoïde, le circuit magnétique peut par exemple comporter un anneau disposé contre les aimants faisant face à l'entrefer, c'est-à-dire un anneau disposé contre les aimants selon l'axe de la machine, ou au contraire en être dépourvu. Le circuit magnétique peut également comporter un anneau disposé selon l'axe de la machine, contre les aimants disposés à l'opposé de l'entrefer. Enfin, le circuit magnétique peut comporter une enveloppe tubulaire entourant les aimants et le rotor à sa périphérie extérieure, et un manchon entourant l'arbre de la machine. En variante encore, l'arbre de la machine peut constituer le circuit magnétique pour faire circuler le flux des aimants disposés sur le côté des pièces polaires faisant face à l'axe de la machine.

L'invention a encore pour objet une machine électrique tournante, comportant au moins un stator et au moins un rotor, le rotor définissant au moins un entrefer avec le stator et ayant un axe de rotation, le rotor comportant des aimants permanents et des pièces polaires entre les aimants, au moins une pièce polaire étant associée à un ou plusieurs aimants permanents définissant au moins trois directions d'aimantation écartées angulairement de plus de 20°, dont l'une au moins n'est pas dirigée vers l'entrefer. Ces directions d'aimantation peuvent être non coplanaires, comme indiqué ci-dessus.

L'invention pourra être mieux comprise à la lecture de la description détaillée qui va suivre, d'exemples de mise en oeuvre de l'invention et à l'examen du dessin annexé, sur lequel :
- la figure 1 est une coupe transversale, schématique et partielle, d'une machine électrique selon l'invention,
- la figure 2 est une coupe axiale, schématique et partielle, selon II-II de la machine de la figure 1,
- les figures 3 à 5 et 5a représentent isolément des variantes de pièces polaires entourées d'aimants,
- la figure 6 est une coupe schématique et partielle d'une variante de réalisation,
- la figure 7 représente un rotor de machine discoïde selon l'invention,
- la figure 8 est une coupe axiale, selon VIII-VIII, de la machine de la figure 7, et
- la figure 9 représente une variante de réalisation.

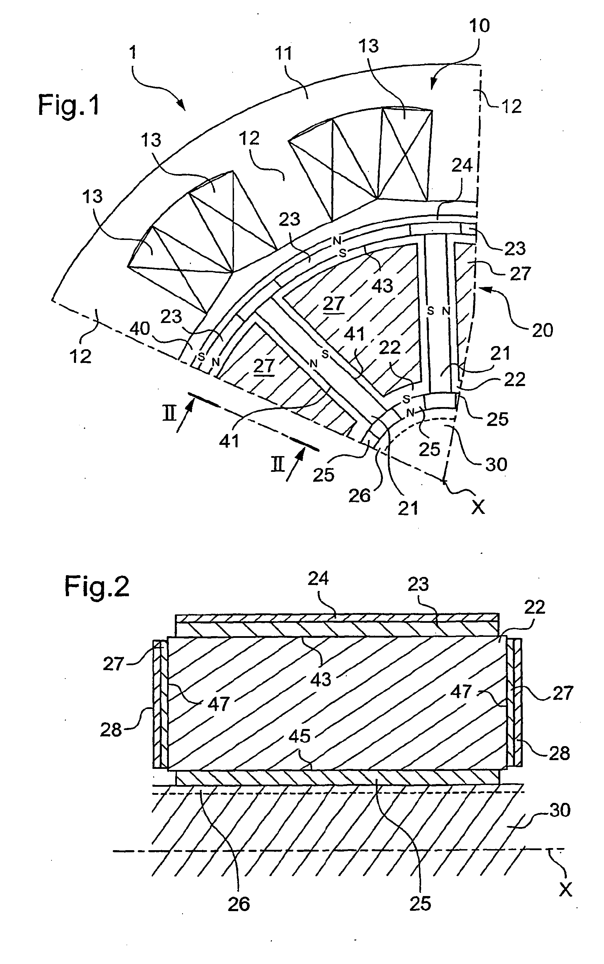

On a représenté aux figures 1 et 2 une machine électrique, comportant un stator 10 radialement extérieur et un rotor 20 radialement intérieur, le stator 10 et le rotor 20 étant concentriques autour de l'axe de rotation X du rotor.

Un entrefer 40 est ménagé entre le stator 10 et le rotor 20.

Le stator 10 comporte un circuit magnétique 11 comportant des dents 12 sur lesquelles sont disposées des bobines 13 individuelles. Le stator 10 est à bobinage concentré. Le circuit magnétique 11 peut par exemple être constitué par des tôles magnétiques superposées ou par une résine chargée de particules magnétiques.

Le stator 10 peut comporter des tôles identiques superposées ou des secteurs assemblés, chaque secteur comportant une ou plusieurs dents, les secteurs étant reliés au milieu d'une dent ou d'une encoche ménagée entre deux dents successives.

Le bobinage du stator 10 peut être distribué, le cas échéant.

Dans l'exemple illustré à la figure 1, les dents 12 du stator 10 sont dépourvues d'épanouissements polaires, mais on ne sort pas du cadre de la présente invention si les dents 12 en comportent.

Le rotor 20 comporte des aimants permanents 21 disposés entre des pièces polaires 22 qui conduisent le flux des aimants.

Chaque pièce polaire 22 comporte par exemple un paquet de tôles magnétiques identiques, superposées et assemblées. En variante, les pièces polaires comportent une résigne chargée de particules magnétiques.

Dans l'exemple considéré, les pièces polaires 22 ne sont pas reliées magnétiquement entre elles, mais on ne sort pas du cadre de la présente invention si les pièces polaires sont reliées magnétiquement entre elles, notamment par des ponts de matière magnétiques, par exemple pour des raisons mécaniques.

Chaque pièce polaire 22 du rotor 20 est entourée par, outre les aimants 21 disposés sur ses faces 41 en regard des pièces polaires 22 adjacentes, un aimant 23 disposé sur la face 43 de la pièce polaire tournée vers l'entrefer 40.

Afin de permettre la circulation du flux des aimants 23, le rotor 20 peut comporter en outre en périphérie une enveloppe tubulaire 24 entourant les aimants 23, dans l'exemple illustré. En variante, le rotor peut être dépourvu d'une telle enveloppe tubulaire.

L'enveloppe 24 est par exemple une pièce rapportée.

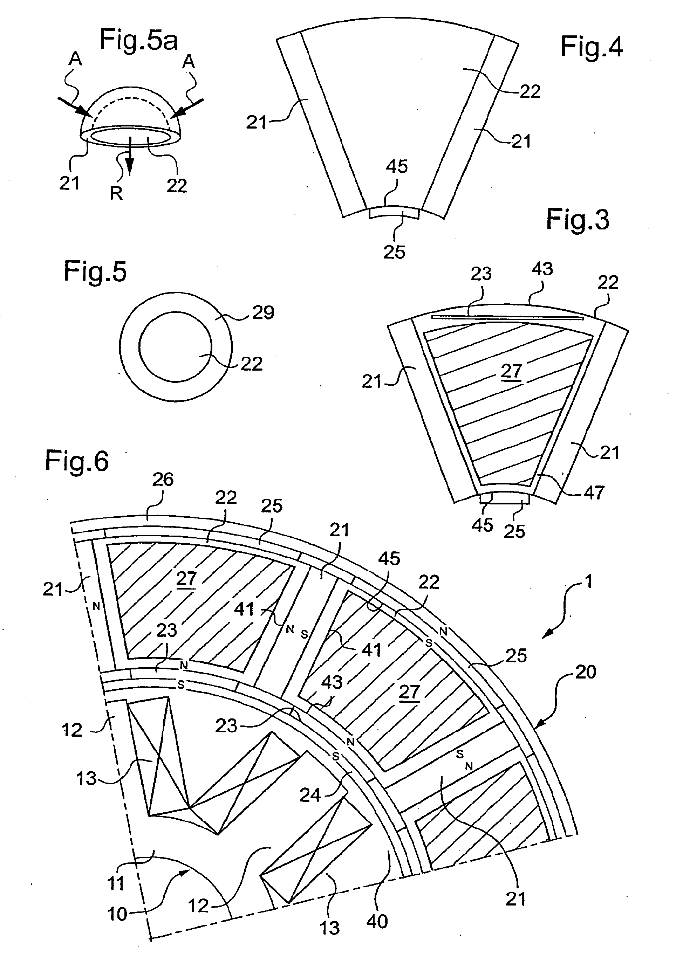

En variante, comme illustré à la figure 3, le rotor 20 est dépourvu d'une telle enveloppe 24, les aimants 23 étant reçus dans des logements des pièces polaires 22 situés sous la surface 43 des pièces polaires 22 en regard de l'entrefer 40. Une telle structure peut être avantageuse du point de vue de la taille de la machine et peut par exemple permettre d'en réduire le diamètre extérieur.

Les logements sont de préférence situés plus près de la surface 43 de la pièce polaire en regard de l'entrefer que de la surface 45 opposée à l'entrefer, par exemple à moins de la moitié de la distance séparant les deux surfaces, voire moins du tiers de cette distance, voire moins du quart.

Des aimants 25 sont disposés sur les faces 45 des pièces polaires 22 opposées à l'entrefer 40, entre les pièces polaires 22 et l'arbre 30 de la machine.

Le flux des aimants 25 peut être refermé soit par l'arbre de la machine 30, qui est alors réalisé dans un matériau magnétique, ou en variante par un manchon 26 entourant l'arbre 30 de la machine, le manchon 26 étant réalisé dans un matériau magnétique et l'arbre 30 étant dans ce cas par exemple réalisé dans un matériau amagnétique.

Le rotor 20 peut comporter des aimants 27 latéraux de part et d'autre des pièces polaires 22 selon l'axe X, en regard des faces latérales 47 des pièces polaires 22.

Pour permettre la circulation du flux des aimants latéraux 27, le rotor 20 peut comporter comme illustré à la figure 2 des anneaux 28 en matière magnétique à chacune de ses extrémités axiales. Le rotor 20 peut encore comporter des aimants 27 d'un seul côté ou des deux côtés.

Dans les exemples des figures 1 à 3, les aimants 21 sont en forme de parallélépipèdes, mais on ne sort pas du cadre de la présente invention s'ils sont par exemple en forme de coin, étant par exemple de section trapézoïdale de largeur diminuant en allant radialement vers l'entrefer, ou encore en losange par exemple.

Dans l'exemple représenté, les aimants 21 s'étendent sur pratiquement toute la dimension radiale des côtés des pièces polaires 22 et à leur contact.

Les aimants 23 et 25 ont été représentés avec une forme incurvée, mais on ne sort pas du cadre de la présente invention s'il en est autrement, les pièces polaires 22 ne comportant par exemple que des faces planes sur lesquelles sont disposés des aimants de section rectangulaire.

Les aimants 27 latéraux ont été représentés avec une forme épousant celle des pièces polaires 22, et les recouvrant presque en totalité, mais les aimants latéraux 27 pourraient ne couvrir que partiellement les faces latérales des pièces polaires 22, étant par exemple de section transversale rectangulaire.

Dans les exemples qui viennent d'être décrits, chaque pièce polaire 22 est associée à six aimants 21, 23, 25, 27, mais on ne sort pas du cadre de la présente invention si chaque pièce polaire est associée à un nombre inférieur d'aimants.

A titre d'exemple, on a illustré à la figure 4 une pièce polaire 22 associée à trois aimants permanents seulement, à savoir deux aimants 21 disposés entre deux pièces polaires consécutives et un aimant 25 disposé sur une face 22 de la pièce polaire 45 opposée à l'entrefer.

Dans une variante de réalisation illustrée à la figure 5, la pièce polaire 22 est entourée par un seul aimant permanent 29 de forme annulaire, de sorte que la pièce polaire 22 est bien associée à un aimant permanent dans au moins trois directions d'aimantation écartées angulairement de plus de 20°, dont l'une au moins n'est pas dirigée vers l'entrefer. Dans l'exemple de la figure 5, la forme de l'aimant 29 est annulaire et l'aimant 29 est de section circulaire.

Bien entendu, on ne sort pas du cadre de la présente invention si la forme de l'aimant 29 est différente en section tout en restant annulaire, étant par exemple définie par une courbe fermée, par exemple oblongue ou d'une autre forme, notamment sensiblement polygonale.

Au moins un aimant permanent 21 peut, en variante encore, avoir la forme d'une calotte par exemple sensiblement hémisphérique, entourant une pièce polaire 22 disposée dans la concavité de l'aimant, comme représenté à la figure 5a. L'aimant permanent définit, du fait de sa forme, plusieurs directions d'aimantation A non coplanaires. L'orientation du flux magnétique résultant R dans la pièce polaire 22 coïncide par exemple avec l'axe de la pièce polaire 22. La pièce polaire 22 peut avoir une portion épousant la forme de la concavité de l'aimant. La surface de la pièce polaire 22 orientée vers l'entrefer peut être plane, concave ou convexe.

Cette surface peut être libre ou recouverte au moins partiellement par un autre aimant permanent ou une autre pièce magnétique.

Dans l'exemple des figures 1 et 2, le rotor 20 est intérieur, mais on ne sort pas du cadre de la présente invention s'il en est autrement.

A titre d'exemple, on a illustré à la figure 6 une machine comportant un rotor 20 radialement extérieur et un stator 10 radialement intérieur. La machine de la figure 4 est par ailleurs analogue à celle de la figure 1, et les mêmes variantes de réalisation peuvent être mises en oeuvre. Par exemple, les aimants 23 faisant face à l'entrefer sont dans l'exemple illustré disposés sur la surface de la pièce polaire 22 et leur flux est refermé par une enveloppe tubulaire 24, mais on ne sort pas du cadre de la présente invention si ces aimants sont disposés sous la surface de la pièce polaire 22 en regard de l'entrefer. En variante encore, le rotor peut être dépourvu d'enveloppe tubulaire 24.

Une machine selon l'invention pourrait encore comporter plusieurs rotors tels qu'illustrés aux figures 1 et 6, mis bout à bout selon l'axe de rotation, étant séparés par des aimants latéraux 27. Dans ce cas, les anneaux 28 peuvent être superflus, sauf aux deux extrémités axiales de la machine.

Dans les exemples qui viennent d'être décrits, la machine est à flux radial, mais il peut en être autrement.

Un rotor selon l'invention peut par exemple être utilisé dans une machine discoïde comportant au moins un stator et au moins un rotor faisant face au stator suivant l'axe de rotation.

En variante, une machine selon l'invention peut comporter au moins deux rotors entourant le stator suivant l'axe de rotation de la machine. La machine pourrait encore comporter deux stators disposés axialement de part et d'autre d'un rotor, et deux rotors d'extrémités, voire plusieurs rotors et stators axialement alternés.

Dans une variante de réalisation, la machine peut par exemple comporter deux stators, l'un radial, l'autre axial.

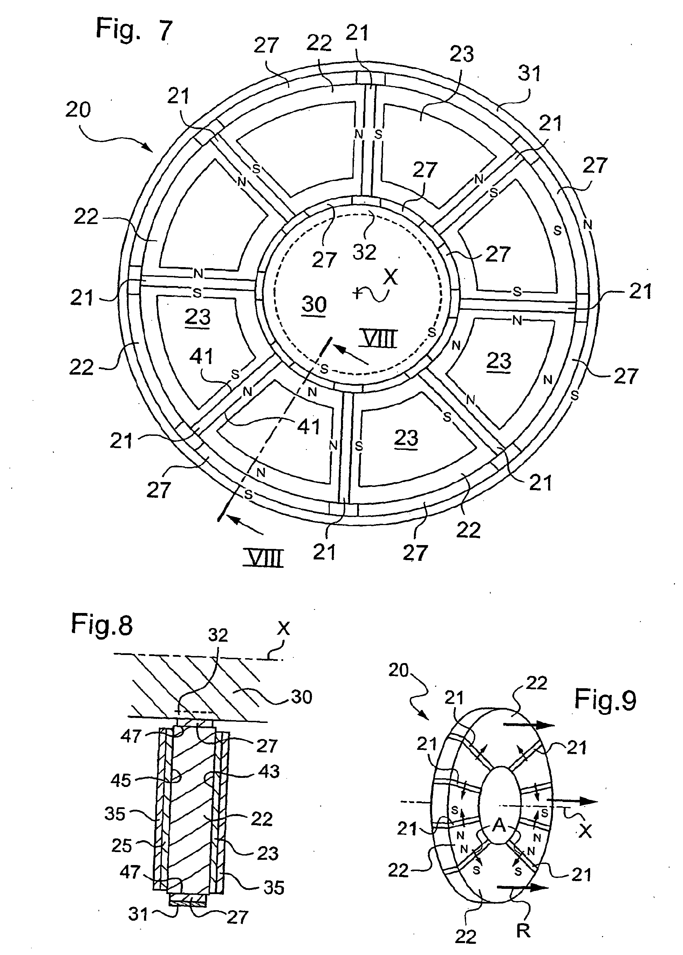

A titre d'exemple, on a représenté aux figures 7 et 8 un rotor de machine discoïde selon l'invention comportant des aimants 21 disposés entre les pièces polaires 22, des aimants 23 faisant face à l'entrefer, des aimants 25 opposés à l'entrefer, et des aimants 27 disposés sur les faces latérales 47 des pièces polaires 22, d'une part sur la périphérie extérieure du rotor et, d'autre part, sur la périphérie intérieure des pièces polaires 22, face à l'axe X de la machine.

Le flux des aimants 23 disposés face à l'entrefer et celui des aimants 25 opposés à l'entrefer peut circuler dans un circuit magnétique comportant par exemple au moins un anneau 35 disposé contre les aimants selon l'axe de rotation, voire deux anneaux 35 disposés à chacune des extrémités axiales du rotor selon l'axe de la machine. En variante, le rotor peut être dépourvu d'anneau 35 disposé contre les aimants faisant face à l'entrefer.

La circulation du flux des aimants 27 disposés sur les faces latérales 47 des pièces polaires 22, à la périphérie extérieure du rotor, peut être assurée par une enveloppe tubulaire 31 entourant les aimants 27 à sa périphérie extérieure.

L'arbre 30 de la machine peut être réalisé dans un matériau magnétique permettant d'assurer la circulation du flux des aimants 27 disposés sur les faces des pièces polaires tournées vers l'axe de rotation du rotor. En variante, le flux des aimants 27 peut circuler dans un manchon 32 entourant l'arbre 30, ce dernier étant dans ce cas par exemple réalisé dans un matériau amagnétique.

Dans la variante de réalisation illustrée à la figure 9, la machine comporte au moins un rotor 20 discoïde faisant face à au moins un stator non illustré selon l'axe de rotation X. Le rotor 20 comporte des aimants permanents 21 disposés entre des pièces polaires 22 réparties circonférentiellement autour de l'axe de rotation X. La direction d'aimantation A de ces aimants est circonférentielle. Chaque pièce polaire est également associée à un aimant disposé en arrière non visible sur la figure, qui définit une troisième direction d'aimantation. La direction du flux magnétique résultant R d'une pièce polaire est parallèle à l'axe de rotation X, en direction du stator. Ainsi, la direction du flux magnétique résultant d'une pièce polaire 22 et celles des aimants permanents 21 associés ne sont pas coplanaires.

Dans des variantes non illustrées, le rotor comporte des aimants permanents sur les faces des pièces polaires situées à la périphérie extérieure et/ou à la périphérie intérieure, en plus ou en remplacement des aimants situés sur les faces arrières.

Bien entendu, l'invention n'est pas limitée aux exemples de réalisation qui viennent d'être décrits.

Un rotor de machine discoïde peut encore comporter des pièces polaires et aimants annulaires comme illustré à la figure 5.

Un rotor conforme à l'invention peut par exemple comporter des pièces polaires 22 dont toutes les faces ne sont pas en regard d'aimants permanents.

Un rotor selon l'invention peut par exemple comporter les aimants 21 disposés entre les pièces polaires. Des aimants peuvent être disposés en outre par exemple du côté des pièces polaires faisant face à l'entrefer et/ou opposés à l'entrefer et/ou latéralement, comme décrit précédemment.

Les aimants peuvent être monoblocs ou être constitués par plusieurs éléments magnétiques mis bout à bout. Les pôles magnétiques de même polarité des aimants entourant une pièce polaire sont dirigés vers cette pièce polaire.

Les aimants permanents peuvent être constitués au moins en partie par un matériau magnétique sous forme de poudre agglomérée.

L'expression « comportant un » doit être comprise comme étant synonyme de « comportant au moins un », sauf si le contraire est spécifié.

## Revendications

1. Machine électrique tournante comportant :
- au moins un stator (10),
- au moins un rotor (20),
le rotor définissant au moins un entrefer (40) avec le stator (10) et ayant un axe de rotation (X), le rotor (20) comportant des aimants permanents (21, 23, 25, 27) et des pieces polaires (22) entre les aimants,
au moins une pièce polaire (22) étant associée à un ou plusieurs aimants permanents pour concentrer le flux magnétique de ce ou ces aimants,
ce ou ces aimants (21, 23, 25, 27) définissant au moins trois directions d'aimantation différentes, le flux résultant dans la pièce polaire (22) en direction du stator (10) étant non coplanaire avec au moins deux directions d'aimantations.

2. Machine selon la revendication 1, dans laquelle le ou les aimants (21, 23, 25, 27) définissent au moins trois directions d'aimantation non coplanaires avec le flux résultant dans la pièce polaire(22).

3. Machine selon l'une quelconque des revendications précédentes, dans laquelle deux des trois directions d'aimantation sont parallèles à un plan perpendiculaire à l'axe de rotation (X) du rotor et dans laquelle la troisième direction d'aimantation est parallèle à l'axe de rotation (X).

4. Machine selon l'une quelconque des revendications précédentes, au moins deux directions d'aimantation différentes d'un ou plusieurs aimants (21, 23, 25, 27) associés à une même pièce polaire (22) étant écartées angulairement de plus de 20°.

5. Machine selon l'une quelconque des revendications précédentes, dans laquelle la pièce polaire (22) au moins trois faces disposées en regard d'aimants permanents (21, 23, 25, 27).

6. Machine selon l'une quelconque des revendications précédentes, au moins un aimant permanent (21, 23, 25, 27) étant disposé en regard d'une face d'une pièce polaire (22) située à la périphérie extérieure du rotor (20).

7. Machine selon l'une quelconque des revendications précédentes, comportant au moins un circuit magnétique permettant au flux magnétique de circuler entre deux aimants circonférentiellement consécutifs.

8. Machine selon la revendication 7 , dans laquelle le circuit magnétique comporte deux anneaux (28) disposés à chacune des extrémités axiales du rotor.

9. Machine selon l'une des revendications 7 et 8, dans laquelle le circuit magnétique comporte une enveloppe tubulaire (24, 26, 31) entourant le rotor à sa périphérie.

10. Machine selon l'une quelconque des revendications précédentes, dans laquelle au moins une pièce polaire (22) est associée à un aimant (21, 23, 25, 27) de forme annulaire.

11. Machine selon l'une quelconque des revendications précédentes, dans laquelle au moins une pièce polaire (22) est associée à un aimant permanent dont la forme est creuse, notamment en forme de calotte.

12. Machine selon l'une quelconque des revendications précédentes, dans laquelle le flux résultant dans au moins une pièce polaire (22) a une direction parallèle à l'axe de rotation (X).

13. Machine selon l'une quelconque des revendications 1 à 11, dans laquelle le flux résultant dans au moins une pièce polaire (22) a une direction perpendiculaire à l'axe de rotation (X).

14. Machine selon l'une quelconque des revendications précédentes, dans laquelle le stator (10) est à bobinage concentré.

15. Machine selon la revendication 1, les pièces polaires (22) présentant chacune une forme hexaédrique.

## Claims

1. A rotary electrical machine comprising:
• at least one stator (10); and
• at least one rotor (20);
the rotor having an axis of rotation (X) and cooperating with the stator (10) to define at least one airgap (40), the rotor comprising permanent magnets (21, 23, 25, 27) and pole pieces (22) between the magnets
at least one pole piece (22) being associated with one or more permanent magnets to concentrate the magnetic flux from said magnet(s); and
said magnet(s) (21, 23, 25, 27) defining at least three different directions of magnetization, the resultant flux in the pole piece (22) towards the stator (10) being non-coplanar with at least two of the directions of magnetization.

2. A machine according to claim 1, in which the magnet(s) (21, 23, 25, 27) define(s) at least three directions of magnetization that are not coplanar with the resulting flux in the pole piece (22).

3. A machine according to any preceding claim, in which two of the three directions of magnetization are parallel to a plane perpendicular to the axis of rotation (X) of the rotor and in which the third direction of magnetization is parallel to the axis of rotation (X)

4. A machine according to any preceding claim, at least two directions of magnetization different from one or more magnets (21, 23, 25, 27) associated with a given pole piece (22) being angularly spaced apart by at least 20°.

5. A machine according to any preceding claim, in which the pole piece (22) has at least three faces placed facing permanent magnets (21, 23, 25, 27).

6. A machine according to any preceding claim, at least one permanent magnet (21, 23, 25, 27) being placed facing a face of a pole piece (22) situated at the outer periphery of the rotor (20).

7. A machine according to any preceding claim, including at least one magnetic circuit enabling magnetic flux to pass between two circumferentially-consecutive magnets.

8. A machine according to claim 7, in which the magnetic circuit comprises two rings (28) disposed at each of the axial ends of the rotor.

9. A machine according to claims 7 and 8, in which the magnetic circuit includes a tubular casing (24, 26, 31) surrounding the periphery of the rotor.

10. A machine according to any preceding claim, in which at least one pole piece (22) is associated with a magnet (21, 23, 25, 27) of annular shape.

11. A machine according (22) to any preceding claim, in which at least one pole piece is associated with a permanent magnet of hollow shape, in particular having the shape of a spherical cap.

12. A machine according to any preceding claim, in which the resulting flux in at least one pole piece (22) has a direction that is parallel to the axis of rotation (X).

13. A machine according to any one of claims 1 to 11, in which the resulting flux in at least one pole piece (22) has a direction that is perpendicular to the direction of rotation (X).

14. A machine according to any preceding claim, in which the stator (10) has a concentrated winding.

15. A machine according to claim 1, each pole piece (22) presenting a hexahedral shape.

## Patentansprüche

1. Elektrische Rotationsmaschine, umfassend:
wenigstens einen Stator (10);
wenigstens einen Rotor (20);
wobei der Rotor mindestens einen Zwischenraum (40) mit dem Stator (10) definiert und eine Rotationsachse (X) aufweist, wobei der Rotor (20) Permanentmagneten (21, 23, 25, 27) und Polstücke (22) zwischen den Magneten umfasst,
wobei mindestens ein Polstück (22) zu einem oder mehreren Permanentmagneten gehört, um den magnetischen Fluss des oder der Magneten zu bündeln,
wobei der oder die Magneten (21, 23, 25, 27) mindestens drei verschiedene Magnetisierungsrichtungen definieren, wobei der resultierende Fluss in dem Polstück (22) in Richtung des Stators (10) nicht koplanar mit mindestens zwei Magnetisierungsrichtungen ist.

2. Maschine nach Anspruch 1, in der der oder die Magneten (21, 23, 25, 27) mindestens drei mit dem resultierenden Fluss im Polstück (22) nicht koplanare Magnetisierungsrichtungen definieren.

3. Maschine nach einem der vorhergehenden Ansprüche, in der zwei der drei Magnetisierungsrichtungen parallel zu einer zur Rotationsachse (X) des Rotors senkrechten Ebene verlaufen und die dritte Magnetisierungsrichtung parallel zur Rotationsachse (X) verläuft.

4. Maschine nach einem der vorhergehenden Ansprüche, wobei mindestens zwei verschiedene Magnetisierungsrichtungen des einen oder der mehreren Magneten (21, 23, 25, 27), die zu einem gleichen Polstück (22) gehören, um einen Winkel von mehr als 20° voneinander abgespreizt sind.

5. Maschine nach einem der vorhergehenden Ansprüche, in der das Polstück (22) mindestens drei Seiten aufweist, die Permanentmagneten (21, 23, 25, 27) gegenüberliegend angeordnet sind.

6. Maschine nach einem der vorhergehenden Ansprüche, wobei mindestens ein Permanentmagnet (21, 23, 25, 27) einer Seite eines am Außenrand des Rotors (20) gelegenen Polstückes (22) angeordnet ist.

7. Maschine nach einem der vorhergehenden Ansprüche, umfassend mindestens einen magnetischen Kreis, der es dem magnetischen Fluss ermöglicht, zwischen zwei in Umfangsrichtung aufeinanderfolgenden Magneten zu kreisen.

8. Maschine nach Anspruch 7, in der der magnetische Kreis zwei Ringe (28) umfasst, die an jedem der axialen Enden des Rotors angeordnet sind.

9. Maschine nach Anspruch 7 oder 8, in der der magnetische Kreis eine röhrenförmige Hülle (24, 26, 31) umfasst, die den Rotor an seinem Rand umgibt.

10. Maschine nach einem der vorhergehenden Ansprüche, in der mindestens ein Polstück (22) zu einem Magneten (21, 23, 25, 27) in Ringform gehört.

11. Maschine nach einem der vorhergehenden Ansprüche, in der mindestens ein Polstück (22) zu einem Permanentmagneten gehört, dessen Form hohl, insbesondere in Kappenform, ist.

12. Maschine nach einem der vorhergehenden Ansprüche, in der der resultierende Fluss in mindestens einem Polstück (22) eine zur Rotationsachse (X) parallele Richtung aufweist.

13. Maschine nach einem der Ansprüche 1 bis 11, in der der resultierende Fluss in mindestens einem Polstück (22) eine zur Rotationsachse (X) senkrechte Richtung aufweist.

14. Maschine nach einem der vorhergehenden Ansprüche, in der der Stator (10) in konzentrischer Wicklung vorliegt.

15. Maschine nach Anspruch 1, wobei die Polstücke (22) jeweils eine hexaedrische Form darstellen,
